(19) **Europäisches Patentamt / European Patent Office / Office européen des brevets**

(11) **EP 1 710 656 B1**

(12) **EUROPEAN PATENT SPECIFICATION**

(45) Date of publication and mention
of the grant of the patent:
**29.12.2010 Bulletin 2010/52**

(51) Int Cl.:
*G06F 21/24* (2006.01)  *G06F 21/04* (2006.01)

(21) Application number: **05102636.7**

(22) Date of filing: **04.04.2005**

(54) **Securely Using a Display to Exchange Information**

Sichere Verwendung eines Bildschirms zum Austausch von Informationen

Utilisation sécurisée d'un écran pour l'échange d'information

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(43) Date of publication of application:
**11.10.2006 Bulletin 2006/41**

(60) Divisional application:
**09173559.7 / 2 141 627**

(73) Proprietor: **RESEARCH IN MOTION LIMITED**
**Waterloo, Ontario N2L 3W8 (CA)**

(72) Inventors:
• **Brown, Michael S**
**Waterloo, Ontario N2K 4B1 (CA)**

• **Brown, Michael K**
**Kitchener, Ontario N2M 2Z2 (CA)**
• **Little, Herb**
**Waterloo, Ontario N2T 2V8 (CA)**
• **Adams, Neil**
**Waterloo, Ontario N2K 4E4 (CA)**

(74) Representative: **Moore, Barry et al**
**Hanna Moore & Curley**
**13 Lower Lad Lane**
**Dublin 2 (IE)**

(56) References cited:
**EP-A- 1 253 500    US-A1- 2003 051 139**

• **SELECTSOFT PUBLISHING: "typing tutor7" ., 1996, XP002266910**

## Description

In general, wireless communication is insecure and vulnerable to attacks. Various techniques may be employed to secure a wireless communication link or to make it less vulnerable to attacks. For example, cryptographic techniques may be employed to secure a wireless communication link. In symmetric-key systems (also known as "secret-key systems"), a single, common cryptographic key is stored by two communication devices. In public-key systems (also known as "public-private pair systems"), each communication device stores its own private key and freely distributes its own public key.

Various security concerns exist with the use of cryptographic techniques. For example, secrets need to be shared between the two communication devices in a secure and authenticated manner. Especially in the case of mobile devices, it may be desirable to have only those two devices know the secret and not require the intervention/involvement of an Information Technology (IT) administrator. Also, it may be desirable to verify that the devices share a secret without exposing that secret to others, and to use the secret to generate a key to secure a communication link between the devices.

US2003/0051139 discloses a projector system including a projector and a personal computer PC as an information terminal, which communicate with each other via a network connection. The projector generates a password required for establishment of the network connection and projects the password on a screen SC. A user of the personal computer PC inputs the password projected on the screen SC. The password is used for authentication of the network connection between the projector and the personal computer PC and cipher communication therebetween. The projector stops the projection and display of the password when the connection is established between the projector and the personal computer PC. Establishment of communication, which allows cipher communication between the projector and the personal computer PC, is confirmed by the ceased projection of the password.

In another aspect, the present invention provides a method as defined in independent claim 1.

Other aspects of the present invention relate to a first device as defined in independent claim 5 and a computer program product comprising code means executable by a processor as defined in independent claim 4.

## BRIEF DESCRIPTION OF THE DRAWINGS

Embodiments of the invention are illustrated by way of example and not limitation in the figures of the accompanying drawings, in which like reference numerals indicate corresponding, analogous or similar elements, and in which:

Figure 1 is a schematic diagram of an exemplary system;

Figure 2 is a flowchart of an exemplary method to be implemented by the devices in the system of Figure 1;

Figure 3 is a flowchart of an exemplary method for establishing a secret between two devices;

Figure 4 is a flowchart of an exemplary method for generating a symmetric key from a secret;

Figure 5 is a flowchart of an exemplary method for generating a symmetric key; and

Figure 6 is a block diagram of the exemplary system of Figure 1.

It will be appreciated that for simplicity and clarity of illustration, elements shown in the figures have not necessarily been drawn to scale. For example, the dimensions of some of the elements may be exaggerated relative to other elements for clarity.

## DETAILS

In the following detailed description, numerous specific details are set forth in order to provide a thorough understanding of embodiments of the invention. However it will be understood by those of ordinary skill in the art that the embodiments of the invention may be practiced without these specific details. In other instances, well-known methods, procedures, components and circuits have not been described in detail so as not to obscure the embodiments of the invention.

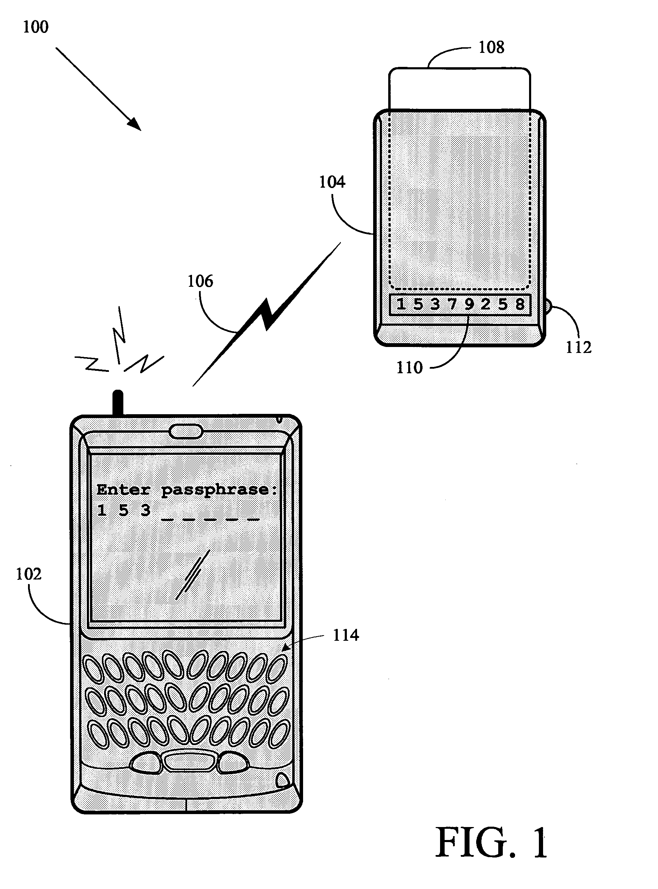

Reference is made to Figure 1, which is a schematic diagram of an exemplary system, according to some embodiments of the invention. A system 100 includes a mobile device 102 and a wireless smart card reader 104. Mobile device 102 and smart card reader 104 are able to communicate over a wireless communication link 106. A non-exhaustive list of examples of wireless local area network standards for wireless communication link 106 includes the Institute of Electrical and Electronic Engineers (IEEE) for Wireless LAN MAC and Physical layer (PHY) 802.11 a, b, g and n specifications or future related standards, the Bluetooth® standard, the Zigbee™ standard and the like.

A smart card 108 is shown inserted into smart card reader 104. Smart cards are personalized security devices, defined by the ISO7816 standard and its derivatives, as published by the International Organization for Standardization. A smart card may have a form factor of a credit card and may include a semiconductor device. The semiconductor device may include a memory that can be programmed with a secret key and with an authentication certificate, and may include a decryption engine, e.g., a processor and/or dedicated decryption logic. A smart card may include a connector for powering the semiconductor device and performing serial communication with an external device. Alternatively, smart card functionality may be embedded in a device having a different form factor and different communication protocol, for example a Universal Serial Bus (USB) device. The person whose security information is stored on smart card 108 may use smart card reader 104 for identification and to digitally sign and/or decrypt messages sent by device 102.

For example, mobile device 102 may be able to send and receive e-mail messages via an e-mail server (not shown). If, for example, the Secure Multipurpose Internet Mail Extensions (S/MIME) protocol is used, e-mail messages received at mobile device 102 are encrypted using a symmetric algorithm with a random session key generated by the sender of the e-mail message. The e-mail message also includes the session key, encrypted using the public key of the recipient. Upon receipt of an encrypted e-mail message, mobile device 102 may extract the encrypted session key and send it to smart card reader 104 via communication link 106. Smart card reader 104 may send the encrypted session key to smart card 108, and the decryption engine of smart card 108 may decrypt the encrypted session key using the recipient's private decryption key, which is stored in smart card 108. Smart card reader 104 may retrieve the decrypted session key from smart card 108 and forward it to mobile device 102 via communication link 106 so that mobile device 102 can decrypt the received e-mail message. The smart card 108 may prevent unauthorized use of the recipient's private decryption key by requiring that a password or personal identification number (PIN) be supplied before allowing the decryption operation to proceed.

Similarly, to add a digital signature to an e-mail message being sent by mobile device 102, mobile device 102 may send a hash of the contents of the e-mail message to smart card reader 104 over communication link 106. Smart card reader 104 may pass the hash to smart card 108, which may produce a digital signature from the hash and the sender's private signing key, which is stored in smart card 108. Smart card 108 may then pass the digital signature to smart card reader 104, which may forward it to mobile device 102 via communication link 106 so that mobile device 102 can transmit it along with the e-mail message to the e-mail server. Again, smart card 108 may prevent unauthorized use of the recipient's private signing key by requiring that a password or PIN be supplied before allowing the signing operation to proceed.

The unencrypted session key should be sent securely over communication link 106 from smart card reader 104 to mobile device 102 to prevent a third party from retrieving the session key from communication link 106. Similarly, the hash to be signed should be sent authentically over communication link 106 from smart card reader 104 to mobile device 102 to prevent a third party from modifying the hash and thereby causing smart card 108 to produce a signature using a hash different from the hash of the intended message. Smart card reader 104 and mobile device 102 may each store a common, symmetric key and use a symmetric algorithm to secure communications over communication link 106. Alternatively, smart card reader 104 and mobile device 102 may store their own private keys and each other's public keys, and use an asymmetric algorithm combined with a symmetric algorithm to secure communications over communication link 106.

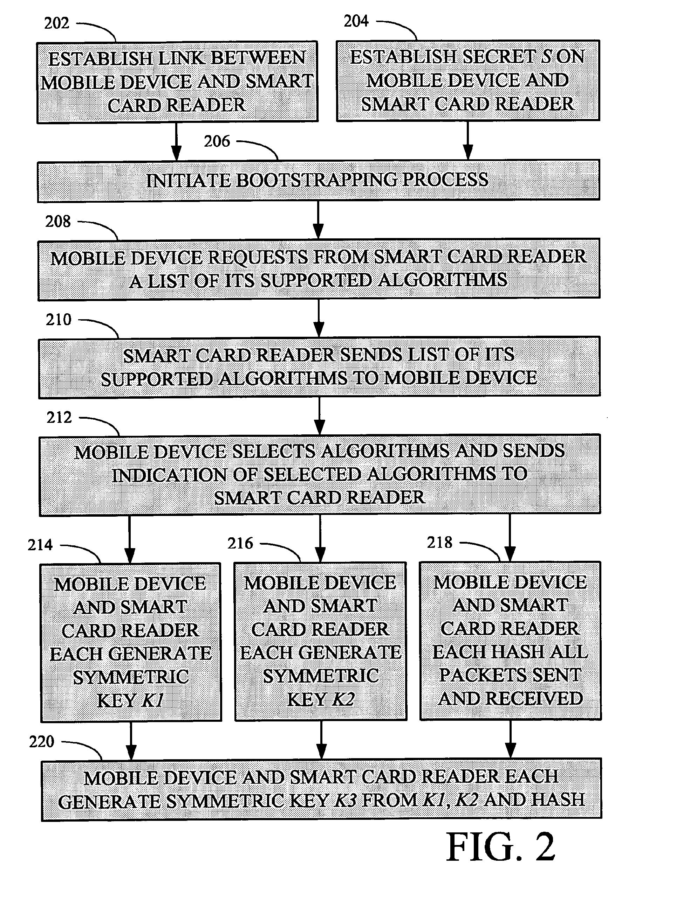

In order to establish the symmetric key used to secure communications over communication link 106, mobile device 102 and smart card reader 104 may use the following method, as illustrated in the flowchart of Figure 2, to which reference is additionally made.

At 202, a link between mobile device 102 and smart card reader 104 is established. This link may be, for example, wireless communication link 106.

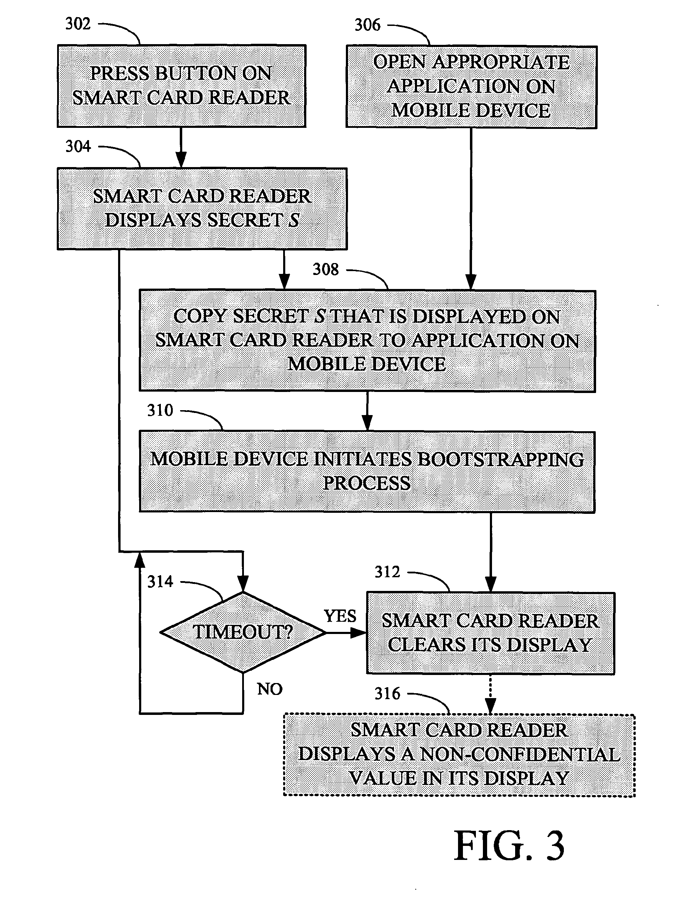

At 204, a short secret $S$ is established locally at mobile device 102 and smart card reader 104. Any method to establish the short secret $S$ securely and authentically is suitable. By "locally", it is meant that the establishment of this secret does not require any involvement or intervention by an Information Technology (IT) administrator. Moreover, since the user of mobile device 102 and smart card reader 104 will perform the method of Figure 2 on an as-needed basis, the establishment of the secret ought to be a simple procedure. An exemplary method to establish the short secret S using a display 110 is described hereinbelow with respect to Figure 3.

Establishing the connection between mobile device 102 and smart card reader 104 may occur before, after or concurrently with establishing the short secret $S$ locally on mobile device 102 and smart card reader 104.

Once the connection between mobile device 102 and smart card reader 104 has been established and the short secret $S$ has been established locally on mobile device 102 and smart card reader 104, a "bootstrapping" process to generate a strong secret from the short secret $S$ is initiated at 206. For example, the short secret $S$ may originate at smart card reader 104, and once it has been shared with mobile device 102, mobile device 102 may initiate the bootstrapping process by sending an appropriate message (or just a packet) to smart card reader 104 over communication link 106.

The bootstrapping process involves at least one public key algorithm, at least one symmetric key algorithm, at least one hashing function, and any other security or non-security related information such as a compression algorithm. A non-exhaustive list of examples of public key algorithms includes Diffie-Hellman (DH) on a large prime-order finite group and DH on an elliptical curve (EC) group. At 208, mobile device 102 requests from smart card reader 104 a list of its supported algorithms. At 210, smart card reader 104 sends a list of its supported algorithms to mobile device 102.

At 212, mobile device 102 selects the algorithms to be used in the subsequent steps of the method and sends an indication of the selected algorithms to smart card reader 104. The selected algorithms include:

a) one or two selected public key algorithms (e.g. the parameters or the name of the elliptic curve group, or the prime and generator of the large prime-order finite group);

b) a selected symmetric key algorithm (e.g. Advanced Encryption Standard (AES) and the key size, or Triple Data Encryption Standard (DES), or the like); and

c) a selected hash function (e.g., Message Digest 5 (MD5), Secure Hashing Algorithm 1 (SHA-1), SHA-256, or the like).

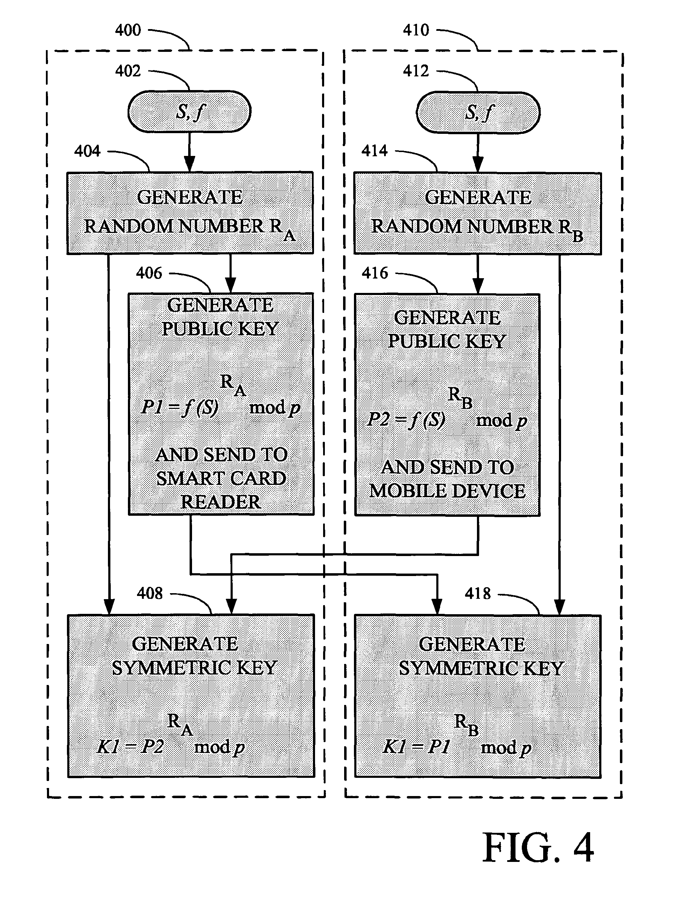

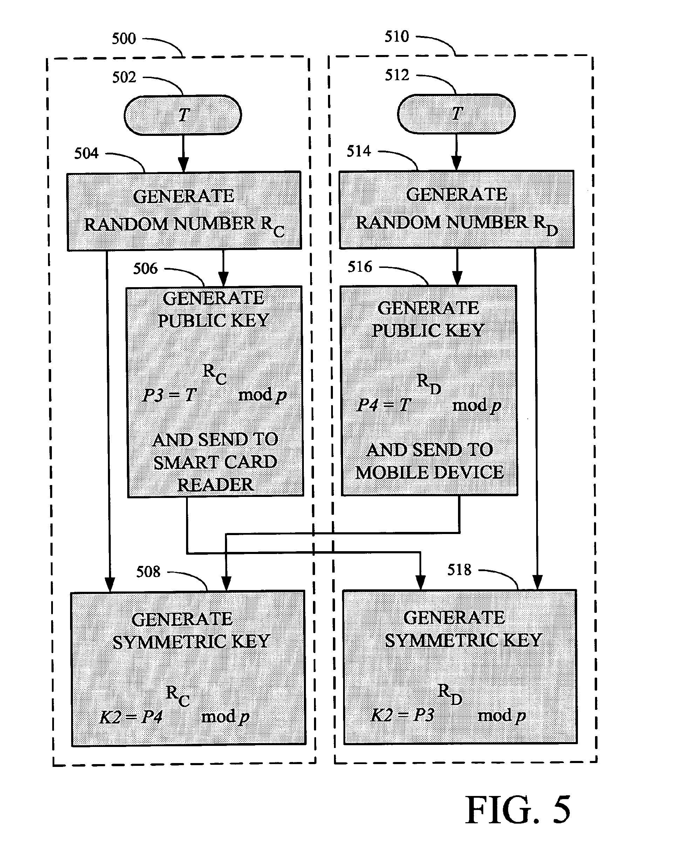

At 214, mobile device 102 and smart card reader 104 each generate the same symmetric key $K1$ from the short secret $S$, as described in further detail hereinbelow with respect to Figure 4. At 216, mobile device 102 and smart card reader 104 each generate the same symmetric key $K2$, as described in further detail hereinbelow with respect to Figure 5. Generating symmetric key $K1$ may occur before, after or concurrently with generating symmetric key $K2$.

At 216, mobile device 102 and smart card reader 104 each hash all the packets sent and received during the generation of symmetric keys $K1$ and $K2$ to produce the hash result $H$. For example, the selected hash function may be applied to the packets as the packets are sent and received, so that this is concurrent with generating the symmetric keys $K1$ and $K2$. In another example, the packets may be stored in a buffer and then the selected hash function may be applied to the packets after the symmetric keys $K1$ and $K2$ have been generated.

Once symmetric keys $K1$ and $K2$ have been generated, and mobile device 102 and smart card reader 104 have produced the hash result $H$, mobile device 102 and smart card reader 104 each generate the same symmetric key $K3$ from $K1$, $K2$ and the hash result $H$. For example, the selected hash function may be used to combine keys $K1$ and $K2$ and the hash result $H$ into $K3$.

Symmetric key $K3$ may then be used to secure communications over communication link 106.

Reference is now made to Figure 3, which is a flowchart of an exemplary method for establishing a secret between two devices, according to some embodiments of the invention. At 302, a user may press a button 112 (Figure 1) or other suitable input component of smart card reader 104, which will cause the short secret $S$, for example, "15379258", to be shown on display 110 of smart card reader 104 at 304. At 306, a user may open an appropriate application on mobile device 102. Causing the short secret $S$ to be shown on display 110 may occur before, after or concurrently with opening the appropriate application on mobile device 102.

Once the short secret $S$ has been shown on display 110 and the appropriate application has been opened on mobile device 102, the user may copy the short secret $S$ to the application on mobile device 102 at 308 using an input component of mobile device 102, for example a keyboard 114. As illustrated in Figure 1, the user has entered the first 3 digits of the 8-digit passphrase that is the short secret $S$. Although this example uses a numerical value for short secret S, any type of value may be used providing the value can be shown in display 110 and inputted using the input component of mobile device 102. Since the short secret $S$ is short, it is simple for the user to copy the secret to the application on mobile device 102. However, the short secret $S$ is too short to be suitable for use as a reliable symmetric key. Copying the short secret $S$ to the application on mobile device 102 may result in mobile device 102 initiating the bootstrapping process (an example of block 206 of Figure 2) at 310, for example, by sending an appropriate message (or just a packet) to smart card reader 104 over communication link 106.

To protect the short secret $S$ from prying eyes, at 312, smart card reader 104 may clear display 110 once smart card reader 104 receives the message or packet sent by mobile device 102 to initiate the bootstrapping process.

Smart card reader 104 may also implement a timeout, and if, as checked at 314, the message or packet initiating the bootstrapping process has not been received by smart card reader 104 within the predefined period of time, which may be calculated, for example, from the time that the secret $S$ is first shown on display 110, smart card reader 104 may clear display 110.

Once smart card reader 104 has cleared display 110, smart card reader 104 may optionally show a non-confidential (possibly random) value on display 110 so that a snooper looking at display 110 will not know whether the value on display 110 is the secret or not.

Reference is now made to Figure 4, which is a flowchart of an exemplary method for generating symmetric key $K1$ from the short secret $S$. The method of Figure 4 is based on the simplified password-based exponential key exchange (SPEKE) method described in U.S. Patent No. 6,226,383 to Jablon. All variations of the SPEKE method are suitable for generating symmetric key $K1$ from the short secret $S$.

The method includes a portion 400 to be implemented by mobile device 102 and a portion 410 to be implemented by smart card reader 104. At 402, mobile device 102 has possession of the secret $S$ and one of the selected public key algorithms. For example, if the selected public key algorithm for generating symmetric key $K1$ is DH on a large prime-order finite group for a particular prime $p$, the function $f$, when applied to the secret $S$, results in a generator of the group. U.S. Patent No. 6,226,383 discusses factors to consider when selecting function $f$. Similarly, at 412, smart card reader 104 has possession of the secret $S$ and the selected public key algorithm for generating symmetric key $K1$.

At 404, mobile device 102 generates a random number $R_A$ in the range of 2 to $p$-1. Then at 406, mobile device 102 generates a short-term public key $P_1$ by raising the generator $f(S)$ to the power $R_A$ within the group and sends public key $P_1$ to smart card reader 104. In the example of DH on the large prime-order finite group for *p*, this is calculated as follows:

$$P_1 = f(S)^{R_A} \bmod p$$

Similarly, at 414, smart card reader 104 generates a random number $R_B$ in the range of 2 to *p*-1. Then at 416, smart card reader 104 generates a short-term public key $P_2$ by raising the generator *f(S)* to the power $R_B$ within the group and sends public key $P_2$ to mobile device 102. In the example of DH on the large prime-order finite group for *p*, this is calculated as follows:

$$P_2 = f(S)^{R_B} \bmod p$$

Generating the random number $R_B$ at smart card reader 104 and generating public key $P_2$ and sending it to mobile device 102 may occur before, after or concurrently with generating the random number $R_A$ at mobile device 102 and generating public key $P_1$ and sending it to smart card reader 104.

Once mobile device 102 has generating the random number $R_A$ and has received public key $P_2$, mobile device 102 generates a symmetric key *K1* at 408. In the example of DH on the large prime-order finite group for *p*, the symmetric key *K1* is calculated as follows:

$$K1 = P_2^{R_A} \bmod p = f(S)^{R_B R_A} \bmod p$$

Once smart card reader 104 has generating the random number $R_B$ and has received public key $P_1$, smart card reader 104 generates the symmetric key *K1* at 418. In the example of DH on the large prime-order finite group for *p*, the symmetric key *K1* is calculated as follows:

$$K1 = P_1^{R_B} \bmod p = f(S)^{R_A R_B} \bmod p$$

Since the operations on the elements of the group are commutative, the two calculations (at mobile device 102 and smart card reader 104) yield the same symmetric key. Generating the symmetric key *K1* at mobile device 102 may occur before, after or concurrently with generating the symmetric key *K1* at smart card reader 104.

Reference is now made to Figure 5, which is a flowchart of an exemplary method for generating symmetric key *K2*. The method of Figure 5 is based on well-known Diffie-Hellman exponential key exchange techniques.

The method includes a portion 500 to be implemented by mobile device 102 and a portion 510 to be implemented by smart card reader 104. At 502, mobile device 102 has possession of one of the selected public key algorithms, which may be the same as or different from the selected public key algorithm used to generate symmetric key *K1*. For example, if the selected public key algorithm for generating symmetric key *K2* is DH on a large prime-order finite group for a particular prime *p*, mobile device 102 has possession of a known, published generator *T* of the group. Similarly, at 512, smart card reader 104 has possession of the selected public key algorithm for generating symmetric key *K2*.

At 504, mobile device 102 generates a random number $R_C$ in the range of 2 to *p*-1. Then at 506, mobile device 102 generates a short-term public key *P3* by raising the generator *T* to the power $R_C$ within the group and sends public key *P3* to smart card reader 104. In the example of DH on the large prime-order finite group for *p*, this is calculated as follows:

$$P3 = T^{R_C} \bmod p$$

Similarly, at 514, smart card reader 104 generates a random number $R_D$ in the range of 2 to *p*-1. Then at 516, smart card reader 104 generates a short-term public key *P4* by raising the generator *T* to the power $R_D$ within the group and sends public key *P4* to mobile device 102. In the example of DH on the large prime-order finite group for *p*, this is calculated as follows:

$$P4 = T^{R_D} \bmod p$$

Generating the random number $R_D$ at smart card reader 104 and generating public key *P4* and sending it to mobile device 102 may occur before, after or concurrently with generating the random number $R_C$ at mobile device 102 and generating public key *P3* and sending it to smart card reader 104.

Once mobile device 102 has generating the random number $R_C$ and has received public key *P4*, mobile device 102 generates a symmetric key *K2* at 508. In the example of DH on the large prime-order finite group for *p*, the symmetric key *K2* is calculated as follows:

$$K2 = P4^{R_C} \bmod p = T^{R_D R_C} \bmod p$$

Once smart card reader 104 has generating the random number $R_D$ and has received public key *P3*, smart card reader 104 generates the symmetric key *K2* at 518. In the example of DH on the large prime-order finite group for *p,* the symmetric key *K2* is calculated as follows:

$$K2 = P3^{R_D} \bmod p = T^{R_C R_D} \bmod p$$

Since the operations on the elements of the group are commutative, the two calculations (at mobile device 102 and smart card reader 104) yield the same symmetric key. Generating the symmetric key *K2* at mobile device 102 may occur before, after or concurrently with generating the symmetric key *K2* at smart card reader 104.

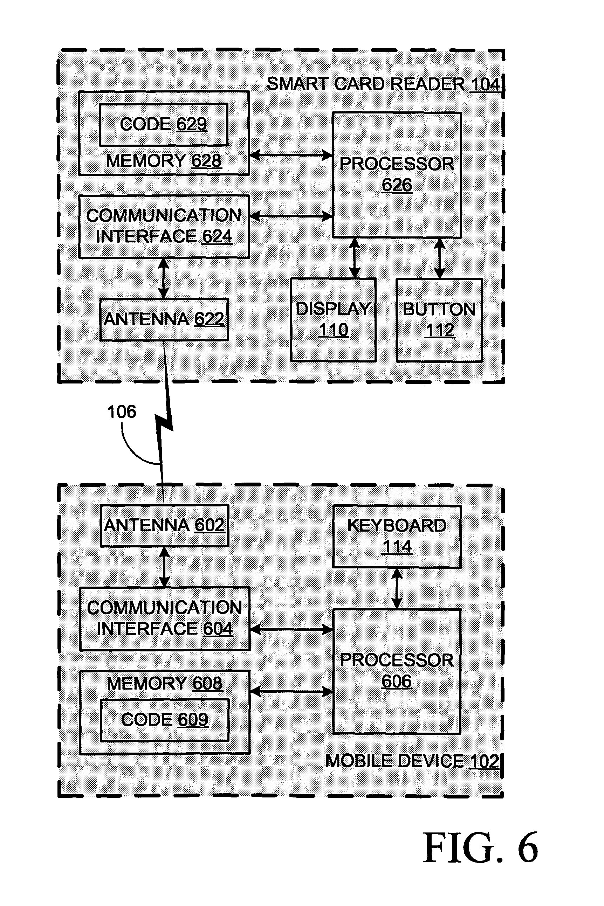

Figure 6 is a block diagram of system 100, according to some embodiments of the invention. For clarity, some components of mobile device 102 and smart card reader 104 are not shown in Figure 6 and are not described explicitly below.

Mobile device 102 includes an antenna 602 and smart card reader 104 includes an antenna 622. A non-exhaustive list of examples for antennae 602 and 622 includes dipole antennae, monopole antennae, multilayer ceramic antennae, planar inverted-F antennae, loop antennae, shot antennae, dual antennae, omnidirectionale antenna and any other suitable antennae.

Mobile device 102 also includes a communication interface 604 coupled to antenna 602. Smart card reader 104 includes a communication interface 624 coupled to antenna 604. A non-exhaustive list of examples for standards with which communication interfaces 604 and 624 may be compatible includes 802.11 a, b, g and n and future related standards, the Bluetooth® standard, the Zigbee™ standard and the like.

Mobile device 102 also includes a processor 606 coupled to communication interface 604 and to keyboard 114. Mobile device 102 also includes a memory 608, which may be fixed in or removable from mobile device 102. Memory 608 may be coupled to processor 606 or partly embedded in processor 606. Communication interface 604 and processor 606 may be part of the same integrated circuit or in separate integrated circuits. Similarly, processor 606 and memory 608 may be part of the same integrated circuit or in separate integrated circuits.

Smart card reader 104 also includes a processor 626 coupled to communication interface 624, to display 110 and to button 112. Smart card reader 104 also includes a memory 628, which may be fixed in or removable from smart card reader 104. Memory 628 may be coupled to processor 626 or partly embedded in processor 626. Communication interface 624 and processor 626 may be part of the same integrated circuit or in separate integrated circuits. Similarly, processor 626 and memory 628 may be part of the same integrated circuit or in separate integrated circuits.

A non-exhaustive list of examples for processors 606 and 626 includes a central processing unit (CPU), a digital signal processor (DSP), a reduced instruction set computer (RISC), a complex instruction set computer (CISC) and the like. Furthermore, processors 606 and 626 may be part of an application specific integrated circuit (ASIC) or may be a part of an application specific standard product (ASSP).

A non-exhaustive list of examples for memories 606 and 626 includes any combination of the following:

a) semiconductor devices such as registers, latches, read only memory (ROM), mask ROM, electrically erasable programmable read only memory devices (EEPROM), flash memory devices, non-volatile random access memory devices (NVRAM), synchronous dynamic random access memory (SDRAM) devices, RAMBUS dynamic random access memory (RDRAM) devices, double data rate (DDR) memory devices, static random access memory (SRAM), universal serial bus (USB) removable memory, and the like;

b) optical devices, such as compact disk read only memory (CD ROM), and the like; and

c) magnetic devices, such as a hard disk, a floppy disk, a magnetic tape, and the like.

Memory 608 may store executable code 609 which, when executed by processor 606, may cause mobile device 102 to implement relevant portions of any or a combination of the methods of Figures 2, 3, 4 and 5.

Memory 628 may store executable code 629 which, when executed by processor 626, may cause smart card reader 104 to implement relevant portions of any or a combination of the methods of Figures 2, 3, 4 and 5.

The preceding explanation uses the example of mobile device 102, smart card reader 104 and wireless communication link 106. However, embodiments of the invention are equally applicable to any two devices (not necessary mobile devices) where the security and/or authenticity of the communication link (not necessarily wireless) between the two devices are possibly unsatisfactory. Similarly, other embodiments of the invention are equally applicable to any two devices (not necessarily mobile devices) where this is a need to securely exchange information displayed on one of the devices with the other device.

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the scope of the claims.

**Claims**

1. A method of securing communication over a communication link (106) between a first device (104) and a second device (102), the method comprising, at the first device, the steps of:

establishing the communication link (106) between the first device (104) and the second device (102);

causing a confidential value to be cleared from a display (110) of the first device (104) once an indication, that an input has been inputted at the second device (102), is received from the second device (102) via a first communication interface (624) over the communication link (106);

initiating, once the first device (104) receives the indication via the first communication interface (624), a process during which the first device (104) is configured to

generate a first symmetric key from the confidential value;

generate a second symmetric key;

produce a first hash result by hashing all packets sent to and received from the second device (102) during generation by the first device (104) of the first symmetric key and the second symmetric key and during generation by the second device (102) of the second symmetric key and of a key which is identical to the first symmetric key if the input is identical to the confidential value;

generate a third symmetric key from the first symmetric key, the second symmetric key, and the first hash result; and

use the third symmetric key to secure communication over the communication link (106).

2. The method of claim 1, further comprising:

showing a non-confidential value on the display (110) once the confidential value is cleared from the display (110).

3. The method of claim 1, further comprising:

showing a random value on the display (110) once the confidential value is cleared from the display (110).

4. A computer readable medium (628) comprising code means (629) executable by a processor (626) to carry out the method steps as performed on the first device (104) of any one of claims 1 to 3.

5. A first device (104) comprising:

a display (110) to show a confidential value;

a first communication interface (624);
a first processor (626); and
a memory (628) storing first executable code means (629) which, when executed by the first processor (626), is configured to carry out the method steps of any one of claims 1 to 3.

6. The first device (104) of claim 5, wherein the first communication interface (624) is a wireless communication interface.

7. A system (100) comprising:

a first device (104) as claimed in claim 5 or claim 6; and
a second device (102) comprising:

an input component (114) to enable input of the confidential value;

a second communication interface (604) able to transmit to the first device (104) an indication that input has been inputted at the second device (102);

a processor (606); and

a memory (608) storing executable code means (609) which when executed by the processor (606) is configured to carry out the method steps of:

generating the second symmetric key;
generating the key which is identical to the first symmetric key if the input is identical to the confidential value;
producing a second hash result by hashing all packets sent to and received from the first device (104) during generation by the first device (104) of the first symmetric key and the second symmetric key and during generating by the second device (102) of the second symmetric key and of the key which is identical to the first symmetric key if the input is identical to the confidential value;
generating a fourth symmetric key from the second symmetric key, the key which is identical to the first symmetric key if the input is identical to the confidential value, and the second hash result, wherein the fourth symmetric key is identical to the third symmetric key if the input is identical to the confidential value; and
using the fourth symmetric key to secure communication over the communication link (106).

8. The system (100) of claim 7, wherein the first communication interface (624) and the second communication interface (604) are wireless communication interfaces.

**Patentansprüche**

1. Verfahren zum Sichern von Kommunikation über eine Kommunikationsverbindung (106) zwischen einer ersten Vorrichtung (104) und einer zweiten Vorrichtung (102), wobei in dem Verfahren an der ersten Vorrichtung
die Kommunikationsverbindung (106) zwischen der ersten Vorrichtung (104) und der zweiten Vorrichtung (102) aufgebaut wird,
veranlasst wird, dass ein vertraulicher Wert von der Anzeige (110) der ersten Vorrichtung (104) gelöscht wird, sobald eine Angabe, dass eine Eingabe an der zweiten Vorrichtung (102) eingegeben worden ist, von der zweiten Vorrichtung (102) über eine erste Kommunikationsschnittstelle (624) über die Kommunikationsverbindung (106) empfangen wird, sobald die erste Vorrichtung (104) die Angabe über die erste Kommunikationsschnittstelle (624) empfängt,
ein Prozess angefangen wird, während dem die erste Vorrichtung (104) konfiguriert wird,
einen ersten symmetrischen Schlüssel aus dem vertraulichen Wert zu erzeugen,
einen zweiten symmetrischen Schlüssel zu erzeugen,
ein erstes Hash-Ergebnis zu produzieren, indem alle Pakete gehasht werden, die an die zweite Vorrichtung gesendet und von der zweiten Vorrichtung (102) empfangen werden, während von der ersten Vorrichtung (104) der erste symmetrische Schlüssel und der zweite symmetrische Schlüssel erzeugt werden und während von der zweiten Vorrichtung (102) der zweite symmetrische Schlüssel und ein Schlüssel, der mit dem ersten symmetrischen Schlüssel identisch ist, wenn die Eingabe mit dem vertraulichen Wert identisch ist, erzeugt werden,
einen dritten symmetrischen Schlüssel aus dem ersten symmetrischen Schlüssel, dem zweiten symmetrischen Schlüssel und dem ersten gehashten Ergebnis zu erzeugen und
den dritten symmetrischen Schlüssel zu verwenden, um Kommunikation über die Kommunikationsverbindung (106) zu sichern.

2. Verfahren nach Anspruch 1, in dem ferner
ein nicht vertraulicher Wert auf der Anzeige (110) angezeigt wird, sobald der vertrauliche Wert von der Anzeige (110) gelöscht ist.

3. Verfahren nach Anspruch 1, in dem ferner
ein Zufallswert auf der Anzeige (110) angezeigt wird, sobald der vertrauliche Wert von der Anzeige (110) gelöscht ist.

4. Computerlesbares Medium (628) mit Codemitteln (629), die von einem Prozessor (626) ausführbar sind, um die Verfahrensschritte auszuführen, wie sie auf der ersten Vorrichtung (104) nach einem beliebigen der Ansprüche 1 bis 3 durchgeführt sind.

5. Erste Vorrichtung (104) mit
einer Anzeige (110), um einen vertraulichen Wert anzuzeigen,
einer ersten Kommunikationsschnittstelle (624),
einem ersten Prozessor (626) und
einem Speicher (628), der erste ausführbare Codemittel (629) speichert, die, wenn sie vom ersten Prozessor (626) ausgeführt werden, dazu konfiguriert sind, die Verfahrensschritte nach einem beliebigen der Ansprüche 1 bis 3 auszuführen.

6. Erste Vorrichtung (104) nach Anspruch 5, wobei die erste Kommunikationsschnittstelle (624) eine drahtlose Kommunikationsschnittstelle ist.

7. System (100) mit
einer ersten Vorrichtung (104) nach Anspruch 5 oder 6 und einer zweiten Vorrichtung (102) mit
einer Eingabekomponente (114), um eine Eingabe des vertraulichen Wertes zu ermöglichen,
einer zweiten Kommunikationsschnittstelle (604), die fähig ist, eine Angabe, dass eine Eingabe an der zweiten Vorrichtung (102) eingegeben worden ist, an die erste Vorrichtung (104) zu übermitteln,
einem Prozessor (606) und
einem Speicher (608), der ausführbare Codemittel (609) speichert, die, wenn sie vom ersten Prozessor (606) ausgeführt werden, dazu konfiguriert sind, die folgenden Verfahrensschritte auszuführen:

Erzeugen des zweiten symmetrischen Schlüssels,
Erzeugen des Schlüssels, der mit dem ersten symmetrischen Schlüssel identisch ist, wenn die Eingabe mit dem vertraulichen Wert identisch ist,
Produzieren eines zweiten Hash-Ergebnisses, indem alle Pakete gehasht werden, die an die erste Vorrichtung gesendet und von der ersten Vorrichtung (104) empfangen werden, während von der ersten Vorrichtung (104) der erste symmetrische Schlüssel und der zweite symmetrische Schlüssel erzeugt werden und während von der zweiten Vorrichtung (102) der zweite symmetrische Schlüssel und ein Schlüssel, der mit dem ersten symmetrischen Schlüssel identisch ist, wenn die Eingabe mit dem vertraulichen Wert identisch ist, erzeugt werden,
Erzeugen eines vierten symmetrischen Schlüssels aus dem zweiten symmetrischen Schlüssel, dem Schlüssel, der mit dem ersten symmetrischen Schlüssel identisch ist, wenn die Eingabe mit dem vertraulichen Wert identisch ist, und

dem zweiten Hash-Ergebnis, wobei der vierte symmetrische Schlüssel mit dem dritten symmetrischen Schlüssel identisch ist, wenn die Eingabe mit dem vertraulichen Wert identisch ist, und

Verwenden des vierten symmetrischen Schlüssels, um Kommunikation über die Kommunikationsverbindung (106) zu sichern.

8. System (100) nach Anspruch 7, wobei die erste Kommunikationsschnittstelle (624) und die zweite Kommunikationsschnittstelle (604) drahtlose Kommunikationsschnittstellen sind.

## Revendications

1. Procédé permettant de sécuriser une communication sur une liaison de communication (106) entre un premier dispositif (104) et un deuxième dispositif (102), le procédé comprenant, au niveau du premier dispositif, les étapes consistant à :

    établir la liaison de communication (106) entre le premier dispositif (104) et le deuxième dispositif (102) ;
    amener une valeur confidentielle à être effacée d'un affichage (110) du premier dispositif (104) dès lors qu'une indication qu'une entrée a été faite au niveau du deuxième dispositif (102), est reçue du deuxième dispositif (102) à travers une première interface de communication (624) sur la liaison de communication (106) ;
    lancer, dès lors que le premier dispositif (104) reçoit l'indication à travers la première interface de communication (624), un processus pendant lequel le premier dispositif (104) est configuré pour
    générer une première clé symétrique d'après la valeur confidentielle ;
    générer une deuxième clé symétrique ;
    produire un premier résultat de hachage en soumettant à un hachage tous les paquets envoyés au, et reçus du, deuxième dispositif (102) pendant la génération par le premier dispositif (104) de la première clé symétrique et de la deuxième clé symétrique et pendant la génération par le deuxième dispositif (102) de la deuxième clé symétrique et d'une clé qui est identique à la première clé symétrique si l'entrée est identique à la valeur confidentielle ;
    générer une troisième clé symétrique à partir de la première clé symétrique, de la deuxième clé symétrique et du premier résultat de hachage ; et
    utiliser la troisième clé symétrique pour sécuriser une communication sur la liaison de communication (106).

2. Procédé de la revendication 1, comprenant en outre le fait :

    de montrer une valeur non confidentielle sur l'affichage (110) dès lors que la valeur confidentielle est effacée de l'affichage (110).

3. Procédé de la revendication 1, comprenant en outre le fait :

    de montrer une valeur aléatoire sur l'affichage (110) dès lors que la valeur confidentielle est effacée de l'affichage (110) .

4. Support lisible par ordinateur (628) comprenant des moyens de code (629) exécutables par un processeur (626) afin d'exécuter les étapes du procédé telles qu'elles sont réalisées sur le premier dispositif (104) de l'une quelconque des revendications 1 à 3.

5. Premier dispositif (104) comprenant :

    un affichage (110) destiné à montrer une valeur confidentielle ;
    une première interface de communication (624) ;
    un premier processeur (626) ; et
    une mémoire (628) stockant des premiers moyens de code exécutables (629) qui, lorsqu'ils sont exécutés par le premier processeur (626), sont configurés pour réaliser les étapes du procédé de l'une quelconque des revendications 1 à 3.

6. Premier dispositif (104) de la revendication 5, dans lequel la première interface de communication (624) est une interface de communication sans fil.

7. Système (100) comprenant :

    un premier dispositif (104) tel que revendiqué dans la revendication 5 ou la revendication 6 ; et
    un deuxième dispositif (102) comprenant :

        un composant d'entrée (114) pour permettre l'entrée de la valeur confidentielle ;
        une deuxième interface de communication (604) pouvant transmettre au premier dispositif (104) une indication qu'une entrée a été faite au niveau du deuxième dispositif (102) ;
        un processeur (606) ; et
        une mémoire (608) stockant des moyens de code exécutables (609) qui, lorsqu'ils sont exécutés par le processeur (606) sont configurés pour réaliser les étapes du procédé consistant à :

générer la deuxième clé symétrique ;
générer la clé qui est identique à la première clé symétrique si l'entrée est identique à la valeur confidentielle ;
produire un deuxième résultat de hachage en soumettant à un hachage tous les paquets envoyés au, et reçus du, premier dispositif (104) pendant la génération par le premier dispositif (104) de la première clé symétrique et de la deuxième clé symétrique et pendant la génération par le deuxième dispositif (102) de la deuxième clé symétrique et de la clé qui est identique à la première clé symétrique si l'entrée est identique à la valeur confidentielle ;
générer une quatrième clé symétrique à partir de la deuxième clé symétrique, de la clé qui est identique à la première clé symétrique si l'entrée est identique à la valeur confidentielle, et du deuxième résultat de hachage, dans lequel la quatrième clé symétrique est identique à la troisième clé symétrique si l'entrée est identique à la valeur confidentielle ; et
utiliser la quatrième clé symétrique pour sécuriser une communication sur la liaison de communication (106).

8. Système (100) de la revendication 7, dans lequel la première interface de communication (624) et la deuxième interface de communication (604) sont des interfaces de communication sans fil.

100

108

104

106

1 5 3 7 9 2 5 8

110

112

Enter passphrase:
1 5 3 _ _ _ _ _

102

114

FIG. 1

202 ——
**ESTABLISH LINK BETWEEN MOBILE DEVICE AND SMART CARD READER**

204 ——
**ESTABLISH SECRET *S* ON MOBILE DEVICE AND SMART CARD READER**

206 ——
**INITIATE BOOTSTRAPPING PROCESS**

208 ——
**MOBILE DEVICE REQUESTS FROM SMART CARD READER A LIST OF ITS SUPPORTED ALGORITHMS**

210 ——
**SMART CARD READER SENDS LIST OF ITS SUPPORTED ALGORITHMS TO MOBILE DEVICE**

212 ——
**MOBILE DEVICE SELECTS ALGORITHMS AND SENDS INDICATION OF SELECTED ALGORITHMS TO SMART CARD READER**

214 ——
**MOBILE DEVICE AND SMART CARD READER EACH GENERATE SYMMETRIC KEY *K1***

216 ——
**MOBILE DEVICE AND SMART CARD READER EACH GENERATE SYMMETRIC KEY *K2***

218 ——
**MOBILE DEVICE AND SMART CARD READER EACH HASH ALL PACKETS SENT AND RECEIVED**

220 ——
**MOBILE DEVICE AND SMART CARD READER EACH GENERATE SYMMETRIC KEY *K3* FROM *K1*, *K2* AND HASH**

# FIG. 2

12

302

PRESS BUTTON ON
SMART CARD READER

306

OPEN APPROPRIATE
APPLICATION ON
MOBILE DEVICE

304

SMART CARD READER
DISPLAYS SECRET *S*

308

COPY SECRET *S* THAT IS DISPLAYED ON
SMART CARD READER TO APPLICATION ON
MOBILE DEVICE

310

MOBILE DEVICE INITIATES BOOTSTRAPPING
PROCESS

314

TIMEOUT?

YES

NO

312

SMART CARD READER
CLEARS ITS DISPLAY

316

SMART CARD READER
DISPLAYS A NON-CONFIDENTIAL
VALUE IN ITS DISPLAY

FIG. 3

400

402

$$S, f$$

404

GENERATE
RANDOM NUMBER $R_A$

406

GENERATE
PUBLIC KEY

$$P1 = f(S)^{R_A} \bmod p$$

AND SEND TO
SMART CARD
READER

408

GENERATE
SYMMETRIC KEY

$$K1 = P2^{R_A} \bmod p$$

410

412

$$S, f$$

414

GENERATE
RANDOM NUMBER $R_B$

416

GENERATE
PUBLIC KEY

$$P2 = f(S)^{R_B} \bmod p$$

AND SEND TO
MOBILE DEVICE

418

GENERATE
SYMMETRIC KEY

$$K1 = P1^{R_B} \bmod p$$

# FIG. 4

FIG. 5

FIG. 6

**EP 1 710 656 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030051139 A

- US 6226383 B, Jablon